# EUROPEAN PATENT APPLICATION

(11) **EP 4 575 896 A1**
(43) Date of publication of application: **25.06.2025**
(21) Application number: 24222605.8
(22) Date of filing: 20.12.2024
(51) Int. Cl.: G06N 3/045, G06N 3/0475, G06N 3/096, G06N 3/0455

(54) **SYSTEM FOR ADAPTIVE PROMPT ENHANCEMENT IN GENERATIVE ARTIFICIAL INTELLIGENCE**

(30) Priority: 21.12.2023 US 202318392159
(71) Applicant: Intuit Inc., Mountain View, CA 94043 (US)
(72) Inventor: MUTHU, Malathy, Mountain View, 94043 (US); SRIVASTAVA, Raj, Mountain View, 94043 (US); ARORA, Avneet, Mountain View, 94043 (US)
(74) Representative: D Young & Co LLP

(57) **Abstract**

Aspects of the present disclosure relate to generating optimized machine learning model prompts. Embodiments include providing an input prompt to a child machine learning model that directs the child machine learning model to generate an output. Embodiments further include generating a parent model prompt comprising instructions to generate a score for the input prompt based on one or more scoring criteria, the input prompt, and the output of the child machine learning model. Embodiments further include providing the parent model prompt to a parent machine learning model. Embodiments further include generating, by a generative machine learning model, an optimized prompt for the child machine learning model based on the generated score for the input prompt.

## Description

### INTRODUCTION

Aspects of the present disclosure relate to techniques for automated optimization of machine learning prompts. In particular, techniques described herein involve using a parent machine learning model to score an input prompt to a child machine learning model based on an output of the child machine learning model, and then generating an optimized prompt for the child machine learning model based on the score.

### BACKGROUND

A growing number of people, businesses, and organizations around the world utilize machine learning models to assist with countless aspects of life. For example, machine learning models may be used to automate tedious tasks by generating content in response to prompts. By effectively utilizing prompts, these machine learning models can significantly reduce the amount of time and labor required to complete tasks.

The process of configuring a machine learning model to perform a given task is often complex and tedious. In some cases, prompts are used to configure a machine learning model to perform a task, such as generating an output based on an input. However, there may be deficiencies in these prompts that lead to unexpected errors in the output of the machine learning model. Correcting these deficiencies can require an extensive amount of trial and error, resulting in wasted time and resources. Machine learning models with a higher number of parameters are better at producing error-free outputs and thus may not require an optimized prompt in some cases. However, using machine learning models with a higher number of parameters requires using more computing resources than would be required to use a machine learning model with a lower number of parameters.

### BRIEF SUMMARY

Particular aspects are set out in the appended independent claims. Various optional embodiments are set out in the dependent claims.

From one perspective, at least some of the described approaches may relate to improved techniques for automated optimization of machine learning prompts.

Certain embodiments provide a method for optimizing machine learning model prompts. The method generally includes: providing an input prompt to a child machine learning model that directs the child machine learning model to generate an output; generating a parent model prompt comprising instructions to generate a score for the input prompt based on one or more scoring criteria, the input prompt, and the output of the child machine learning model; providing the parent model prompt to a parent machine learning model; and generating, by a generative machine learning model, an optimized prompt for the child machine learning model based on the generated score for the input prompt.

Other embodiments provide a method for optimizing machine learning model prompts. The method generally includes: providing an input prompt to a child machine learning model that directs the child machine learning model to generate an output; providing the input prompt and the output generated by the child machine learning model to a parent machine learning model that has been trained to generate: one or more scoring criteria for the input prompt, and a score for the input prompt based on the one or more scoring criteria, the output generated by the child machine learning model, and the input prompt; and generating, by a generative machine learning model, an optimized prompt based on the generated score for the input prompt.

Other embodiments provide processing systems configured to perform the aforementioned methods as well as those described herein; computer-readable media comprising instructions that, when executed by one or more processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of computing components related to optimizing machine learning model prompts.
**FIG. 2** depicts an example of computing components related to optimizing machine learning model prompts.
**FIG. 3** depicts example operations related to optimizing machine learning model prompts.
**FIG. 4** depicts an example of a processing system for optimizing machine learning model prompts.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for optimizing machine learning model prompts.

According to certain embodiments, a parent machine learning model is used to score an input prompt that is provided to a child machine learning model based one or more scoring criteria and the output of the child machine learning model in response to the input prompt. In some cases, an optimized prompt for the child machine learning model is generated based on the score.

Prompts are generally used to direct a machine learning model to perform one or more desired functions. For example, a prompt may comprise natural language instructions to perform a task. When provided with the prompt, the machine learning model may perform the task. Prompts may contain deficiencies that result in the machine learning model incorrectly performing the task. For example, a prompt with an insufficient level of detail in its instructions may lead a machine learning model to extract a wrong type of information from a document or generate an output that is formatted incorrectly.

In some embodiments, an input prompt is provided to a child machine learning model. The child machine learning model may contain a lower number of parameters than a parent machine learning model. As a result of containing a lower number of parameters, the child machine learning model may require fewer computing resources to operate than the parent model when it is provided with a prompt. However, because the child machine learning model has a lower number of parameters, it is more prone to generating an erroneous output than is the parent model and thus requires a more optimized prompt than does the parent model. When provided with an input prompt that has not been optimized, the child machine learning model may generate an output that contains errors based on deficiencies in the prompt.

According to certain embodiments, the input prompt and the output of the child machine learning model may be provided to a parent machine learning model. The parent machine learning model may also be provided with a parent model prompt. The parent model prompt may comprise instructions to generate a score for the input prompt based on one or more scoring criteria for the output of the child machine learning model. The parent model prompt may include scoring criteria provided by users and/or automatically generated scoring criteria (e.g., generated separately by a generative machine learning model or by the parent machine learning model, as described in more detail below). According to some embodiments, the parent model prompt may comprise instructions that direct the parent model to generate one or more scoring criteria that the parent model will use to score the input prompt. The parent model prompt may include instructions to evaluate the input prompt based on the score and/or to produce an explanation of how to modify the input prompt based on the score. The evaluation and/or the explanation may be included as part of the score that is output by the parent machine learning model.

In some embodiments, the parent machine learning model may have a higher number of parameters than the child machine learning model. Because the parent machine learning model has a higher number of parameters than the child machine learning model, the parent machine learning model is less prone to errors and is well-suited for recognizing errors made by the child model and corresponding deficiencies in the input prompt that caused those errors.

Certain embodiments provide that the parent model prompt may be generated by a parent model prompt engine. The parent model prompt engine may include scoring criteria provided by users into the prompt. The parent model prompt engine may also receive scoring criteria generated by the parent machine learning model or another machine learning model and include these scoring criteria into the prompt. The parent model prompt engine may also generate prompts to be provided to other machine learning models, such as a generative machine learning model. A prompt that is generated to be provided to a generative machine learning model may comprise instructions to generate one or more scoring criteria to be used to score the input prompt.

In some embodiments, the one or more scoring criteria may be based on desired features for the output of the child machine learning model. For example, it may be desired that the output of the child model conform to a particular format. One of the criteria may be that the output of the child model conform to this format. If the output of the child machine learning model does not conform to the desired format (e.g., if it lacks a label that is required by the format) then this criterion will not be satisfied.

According to certain embodiments, in response to receiving the input prompt, the output of the child machine learning model, and the parent model prompt, the parent machine learning model may generate a score for the input prompt based on the one or more scoring criteria. The score may include a binary indication of whether or not the criteria were satisfied (i.e., the score for a criterion may be ` 1' if the criterion was satisfied by the output, whereas the score for a criterion may be '0' if the criterion was not satisfied). The score may be accompanied by an indication, also output by the parent machine learning model, of improvements that are required to correct deficiencies in the input prompt. For example, if a criterion is not satisfied by the output of the child machine learning model, the score may be accompanied by an evaluation of the deficiencies of the prompt and/or an explanation for how to modify the input prompt. The parent machine learning model may also generate one or more scoring criteria if instructed to do so by the parent model prompt. For example, the one or more scoring criteria generated by the parent machine learning model may be based on the input prompt, the output of the child machine learning model, scoring criteria provided by users, an indication of user intent, scoring criteria for related prompts, and/or the like.

Certain embodiments provide that the parent machine learning model may be trained to generate the score for the input prompt based on the input prompt, one or more scoring criteria, and the output of the child machine learning model. The parent machine learning model may be trained to generate one or more scoring criteria for the input prompt based on the input prompt, the output of the child machine learning model, scoring criteria provided by users, an indication of user intent, scoring criteria for related prompts, and/or the like.

In some embodiments, a generative machine learning model may be provided with the input prompt and the score for the input prompt (e.g., which may include an evaluation of the deficiencies of the prompt and/or an explanation for how to modify the input prompt). Based on these inputs, the generative machine learning model may generate an optimized prompt for the child machine learning model. For example, the score for the input prompt may indicate that a scoring criterion was not satisfied by the output of the child model. As discussed above, the score may contain directions that explain how to modify the input prompt so that the resulting optimized prompt will cause the child machine learning model to generate an output that satisfies the scoring criterion. As an example, the score may contain an indication that the output of the child machine learning model was not labeled in a way that was required by a scoring criterion. The score may also contain instructions to generate an optimized prompt for the child machine learning model that ensures that the output of the child machine learning model is labeled in a way that satisfies the criterion. When provided with the score and the input prompt, the generative machine learning model may generate an optimized prompt for the child model, and this optimized prompt may ensure that the child machine learning model generates an output that satisfies the scoring criterion. The generative machine learning model may generate one or more scoring criteria for the input prompt in response to a generative model prompt that instructs it to do so.

Certain embodiments provide that the generative machine learning model may be trained to generate optimized prompts for child machine learning models based on the input prompt and the input prompt score. A generative machine learning model that is trained to generate optimized prompts may do so based on an input prompt score that does or does not include directions for modifying the input prompt. A generative machine learning model that is trained to generate optimized prompts for the child machine learning model may also be provided with a generative model prompt instructing it to generate optimized prompts. The generative machine learning model may be trained to generate one or more scoring criteria for the input prompt based on the input prompt, the output of the child machine learning model, scoring criteria provided by users, an indication of user intent, scoring criteria for related prompts, and/or the like. A generative machine learning model that is trained to generate scoring criteria for the input prompt may also be provided with a generative model prompt instructing it to generate scoring criteria.

According to some embodiments, the parent machine learning model may be used as the generative machine learning model. For example, the parent machine learning model may score the input prompt and then generate an optimized prompt based on the score and the input prompt. As discussed above, the parent machine learning model may generate one or more scoring criteria for scoring the input prompt. The parent machine learning model may accomplish these tasks through being provided with prompts instructing it to do so and/or through being trained to do so. By using the parent machine learning model as the generative machine learning model, the scoring of the input prompt and the generation of an optimized prompt may be achieved using the same model.

While embodiments described herein generally involve a parent machine learning model that has a larger number of parameters than the child machine learning model, there may be some cases where it is advantageous to use a parent machine learning model that has a smaller number of parameters than the child machine learning model but provides other benefits. For example, the model used as the parent machine learning model may be a highly specialized and/or extensively trained model, and/or a model that a third party charges a high price to use. A prompt may be optimized using the specialized model as the parent and then deployed for use in another model. Thus, using the techniques disclosed herein with the specialized model as the parent model and a different model as the child model can save cost even when the child model has more parameters than the parent model, even though such a use would not provide the resource-saving benefits of using a child model with fewer parameters than the parent.

Some embodiments provide for repeatedly optimizing an input prompt for a number of iterations. For example, an optimization configuration (e.g., specified by a user) may specify that an input prompt should be optimized for a given number of iterations or until some other condition is met (e.g., a score that meets a threshold condition, a number of successive iterations without improvement, and/or the like). Accordingly, the optimization process may be repeated for a plurality of iterations (e.g., up to the given number of iterations or until some other condition is met) using the optimized prompt from each completed iteration as the input prompt for the subsequent iteration. The optimization may stop before completing the one or more specified conditions if all scoring criteria are satisfied.

According to certain embodiments, user feedback may be used to train or fine-tune the parent machine learning model and/or the generative machine learning model. For example, user feedback may include manual changes to optimized prompts and/or generated scoring criteria, and/or an acceptance or rejection of the optimized prompts and/or generated scoring criteria. The feedback may include an answer to a multiple choice question about the quality of the optimized prompts or generated scoring criteria. The feedback may include natural language feedback indicating a user's level of satisfaction with an optimized prompt or a generated scoring criteria. The feedback may be processed using a natural language processing model such as a large language model or another language processing technique. A natural language processing model may be applied to natural language feedback in order to determine what the user liked or did not like about the optimized prompt or the generated scoring criteria. Feedback may also be received regarding the scoring by the parent model, and this feedback may be used to train or fine-tune the parent model. For example, the parent model and/or the child model may have been pre-trained, such as through a supervised learning process, and may be re-trained or fine-tuned based on user feedback for improved accuracy.

Embodiments of the present disclosure provide numerous technical and practical effects and benefits. For instance, manual optimization of machine learning model prompts can require an extensive amount of trial and error, resulting in wasted time, labor, and computing resources. The automated prompt optimization described herein can greatly reduce and even eliminate this waste. When presented with prompts that have not been optimized, machine learning models with a smaller number of parameters may generate outputs that contain errors. While machine learning models with a higher number of parameters may be capable of generating an error-free output when provided with a prompt that has not been optimized, using such machine learning models is less efficient than using a machine learning model with a smaller number of parameters. By utilizing the techniques described herein, a prompt may be optimized using a parent machine learning model with a higher number of parameters, and then deployed for use with child machine learning models, resulting in drastic improvements in accuracy and efficiency for prompt-based machine learning model systems. For example, a machine learning model with a smaller number of parameters that uses a prompt that has been optimized as disclosed herein may be able to achieve the same result as a machine learning model with a larger number of parameters while using significantly fewer computing resources. While the parent machine learning model may be used once (or a number times in an iterative process) to generate an optimized prompt, the optimized prompt may be stored and used many times with the child machine learning model (e.g., to accomplish a plurality of different tasks that relate to the optimized prompt) without requiring use of the parent machine learning model beyond the generation of the optimized prompt.

Additionally, the prompt optimization system disclosed herein may be continuously improved by training or fine-tuning in response to user feedback, resulting in further improvements to the efficiency and accuracy of prompt refinement. Also, this continuously improving prompt refinement conserves processor resources that would have been wasted using un-optimized prompts.

### Example Components Related to Optimizing Machine Learning Model Prompts

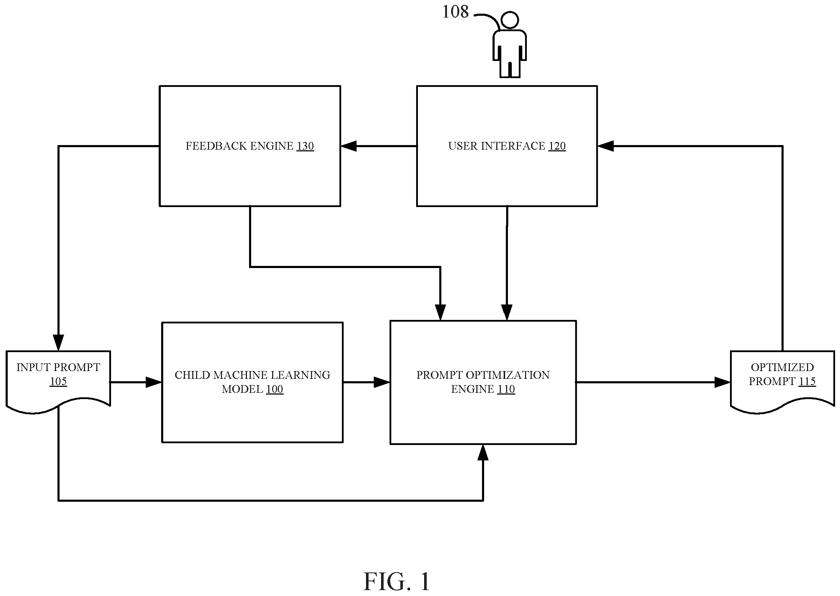

**FIG. 1** is an illustration of example computing components related to optimizing machine learning model prompts.

An input prompt 105 may be provided to a child machine learning model 100. The input prompt 105 may direct the child machine learning model 100 to perform one or more tasks, such as extracting information from a document or generating content based on information. As an example, the input prompt 105 may comprise natural language instructions to perform one or more tasks. An input prompt 105 that has not been optimized may contain deficiencies that cause a machine learning model to perform a task incorrectly, or in a way that is not desired.

The child machine learning model 100 may comprise any type of machine learning model, such as a Bidirectional Encoder Representations from Transformer (BERT) model, a generative pre-trained (GPT) model, other natural language processing models, and/or other models that utilize artificial intelligence techniques. In certain embodiments, the child machine learning model 100 has a lower number of parameters than a parent machine learning model.

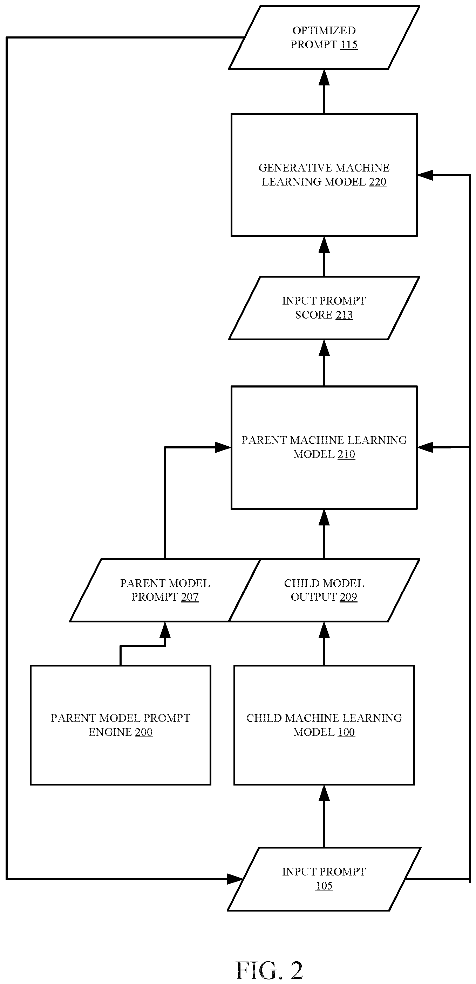

The input prompt 105 and the output of the child machine learning model 100 may be provided to the prompt optimization engine 110. The prompt optimization engine 110 comprises one or more machine learning models. As described in further detail below with respect to FIG. 2, the prompt optimization engine 110 may include a parent machine learning model that generates a score for the input prompt 105 based on the output of the child machine learning model 100 and one or more scoring criteria. As described in further detail below, the prompt optimization engine 110 may include a generative machine learning model that generates an optimized prompt 115 based on the score for the input prompt.

The optimized prompt 115 may be a new version of the input prompt 105 that has been modified by the prompt optimization engine 110 to correct deficiencies. For example, an optimized prompt 115 may contain a greater amount of details and/or more refined instructions so that the child machine learning model 100 will be able to generate the desired output free of errors. Optimized prompts 115 may contain errors that may be corrected through further optimization.

Users 108 may interact with the prompt optimization system through a user interface 120. The user interface 120 may allow users 108 to upload input prompts 105 to the prompt optimization system. The users 108 may also receive optimized prompts 115 through the user interface 120. User feedback may also be submitted through the user interface 120. Users 108 may also specify through the user interface 120 a number of iterations or other conditions for optimizing an input prompt 105. For example, the user 108 may specify that an input prompt should be optimized for five iterations. Based on this indication, the input prompt 105 may be optimized through a process that repeats five times. Five iterations is included as an example, and other numbers and/or conditions are possible. If the score for the input prompt 105 indicates that the prompt does not have deficiencies that need to be corrected, then the input prompt 105 may be presented to the user 108 through the user interface 120 before the specified number of iterations have been completed and/or before one or more other conditions have been satisfied. For example, if the user specified five iterations and the score indicates that there are no more deficiencies in the prompt after the first iteration, the prompt may be presented to the user 108 via user interface 120 without further optimization.

A user feedback engine 130 may be used to process feedback from a user 108. The user feedback may include natural language feedback. The user feedback engine 130 may include a natural language processing model such as a large language model. A natural language processing model may be applied to natural language feedback in order to determine what the user 108 liked or did not like about the optimized prompt and the corresponding output of the child machine learning model, as well as any issues that need to be addressed regarding the optimized prompt 115 (e.g., formatting). Feedback may also be received in the form of a user 108 accepting or rejecting optimized prompts 115, or a user 108 modifying an optimized prompt 115 or otherwise providing alternative prompts. The information gathered by the user feedback engine 130 may then be used to re-train one or more of the models of the prompt optimization engine 110 and/or child machine learning model 100, as discussed in further detail below.

Training or fine-tuning of a machine learning model such as the child machine learning model 100, the parent machine learning model, or another machine learning model (e.g., a generative machine learning model) may involve supervised and/or unsupervised learning processes. Supervised learning techniques generally involves providing training inputs to a machine learning model. The machine learning model processes the training inputs and outputs predictions based on the training inputs. The predictions are compared to the known labels associated with the training inputs to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Parameters adjusted during training may include, for example, hyperparameters, values related to numbers of iterations, weights, functions used by nodes to calculate scores, and the like. In some embodiments, validation and testing are also performed for a machine learning model, such as based on validation data and test data, as is known in the art.

### Example Components Related to Optimizing Machine Learning ModelPrompts

FIG. 2 is an illustration of example computing components related to optimizing machine learning model prompts.

As discussed above, an input prompt 105 may be provided to a child machine learning model 100. The input prompt 105 and the output of the child model 209 may then be provided to a parent machine learning model 210. The output of the child model 209 may contain errors due to deficiencies in the input prompt 105. For example, the input prompt 105 may not contain a sufficient level of detail for the child machine learning model 100 to be able to generate a desired or error-free output, such as an output that conforms to a desired format and contains all of the required information.

The parent machine learning model 210 may be a machine learning model with a higher number of parameters than the child machine learning model 100. For example, the parent machine learning model may be a more advanced model from the same family of models (e.g., GPT-4 may be used as a parent model, while GPT-3 may be used as the child model). As a result of having a higher number of parameters than the child model 100, the parent model 210 may be better able to respond to prompts and may thus be less prone to errors. A model with a higher number of parameters may also be better suited for recognizing errors in the output of a model with fewer parameters and identifying how to optimize a prompt to correct these errors. In certain alternative embodiments, the parent machine learning model 210 may have a lower number of parameters than the child machine learning model 100 but may be specialized in another way and/or may be associated with more financial cost than the child model.

A parent model prompt engine 200 may be used to generate a parent model prompt 207. The parent model prompt engine 200 may comprise a component (e.g., a software component running on one or more processors) configured to populate templates according to a set of rules. In some embodiments, the parent model prompt engine 200 may comprise a machine learning model configured to populate templates according to a set of rules.

The parent model prompt engine 200 may generate a parent model prompt 207 that comprises instructions to generate a score for an input prompt 105 based on one or more scoring criteria provided by users and/or one or more scoring criteria generated by a machine learning model. The parent model prompt 207 may further comprise instructions to evaluate the input prompt 105 based on the one or more criteria and/or to generate directions explaining how to modify the input prompt to correct errors in the child model output 209. In certain embodiments, the parent model prompt 207 may include instructions to generate one or more scoring criteria and use those scoring criteria to generate a score for the input prompt 205.

In response to receiving the input prompt 105, the parent model prompt 207, and the child model output 209, the parent machine learning model 210 may generate an input prompt score 213. The input prompt score 213 may include a binary indication of whether or not each of the scoring criteria was satisfied (i.e., the score for a criterion may be '1' if the criterion was satisfied by the output, whereas the score for a criterion may be '0' if the criterion was not satisfied). The input prompt score 213 may contain an indication of improvements that are required to correct deficiencies in the input prompt 105. For example, if a criterion is not satisfied by the output of the child machine learning model 209, the input prompt score 213 may include an evaluation of the deficiencies of the prompt 105 and/or directions for modifying the input prompt 105.

The input prompt 105 and the input prompt score 213 may be provided to a generative machine learning model 220. The generative machine learning model 220 may be, for example, a Generative Adversarial Network (GAN) or a Variational Autoencoder (VAE). The generative machine learning model 220 may generate an optimized prompt 115 for the child machine learning model 105. In certain embodiments, the parent machine learning model 210 may be used as the generative machine learning model 230, allowing for the scoring and the optimized prompt generation to be accomplished with the same model. While not shown, in certain embodiments, the generative machine learning model 220 may be provided with a generative model prompt. The generative model prompt may be generated by the parent model prompt engine 200 and may comprise instructions to generate optimized prompts 115 and/or one or more scoring criteria to be provided to the parent machine learning model 210 and used in generating the input prompt score 213. The optimized prompt 115 may contain improvements over the input prompt 105 that result in the child machine learning model 100 producing an output that satisfies the scoring criteria when provided with the optimized prompt 115.

As discussed above with respect to **FIG. 1****,** the optimized prompt 115 may be further optimized by repeating the optimization process using the optimized prompt 115 as the input prompt 105 for a specified number of iterations, until some other condition is met, or until there are no more unsatisfied scoring criteria.

In certain embodiments, the parent machine learning model 210 may be trained to generate an input prompt score 213 and/or scoring criteria based on a child model output 209 and the input prompt 207.

In some embodiments, the generative machine learning model 220 may be trained to generate an optimized prompt 115 and/or scoring criteria based on the input prompt score 213 and the input prompt 105.

Certain embodiments provide that the generative machine learning model 220 and/or the parent machine learning model 210 may be trained or fine-tuned using historically optimized prompts. In some embodiments, the machine learning models may be trained using training data that is based on manually optimized prompts. Supervised learning techniques or semi-supervised learning techniques may be used to train or fine-tune the machine learning models based on training data instances comprising historically provided input prompts and historically optimized prompts.

According to some embodiments, user feedback received in response to a user's evaluation of newly optimized prompts 115 may be used to update the training data set. As discussed above with respect to **FIG. 1****,** user feedback may include natural language feedback, an indication of a user's acceptance or rejection of an optimized prompt 115, or a user modifying an optimized prompt 115 or otherwise providing an alternative prompt. The feedback information may then be used to re-train the parent machine learning model 210 and/or the generative machine learning model 220. For example, new training data may be generated for the generative machine learning model 220 based on the user feedback (e.g., indicating manually corrected or verified prompts) and the generative machine learning model 220 may be re-trained based on the new training data for improved accuracy in an interactive feedback loop. The parent machine learning model 210 may also be re-trained in a similar manner based on user feedback. For example, if user feedback includes a verification of a newly optimized prompt 115, the input prompt score 213 may be considered user-verified, and so may be used as new training data to re-train the parent machine learning model 210. Similarly, if user feedback indicates that the newly optimized prompt 115 contains errors (e.g., it results in a child model output 209 that contains errors), the input prompt score 213 may be used as negative training data or a modified version of the optimized prompt 115 may be used as new training data to re-train the parent machine learning model 210.

### Example Operations Related to Optimizing Machine Learning Model Prompts

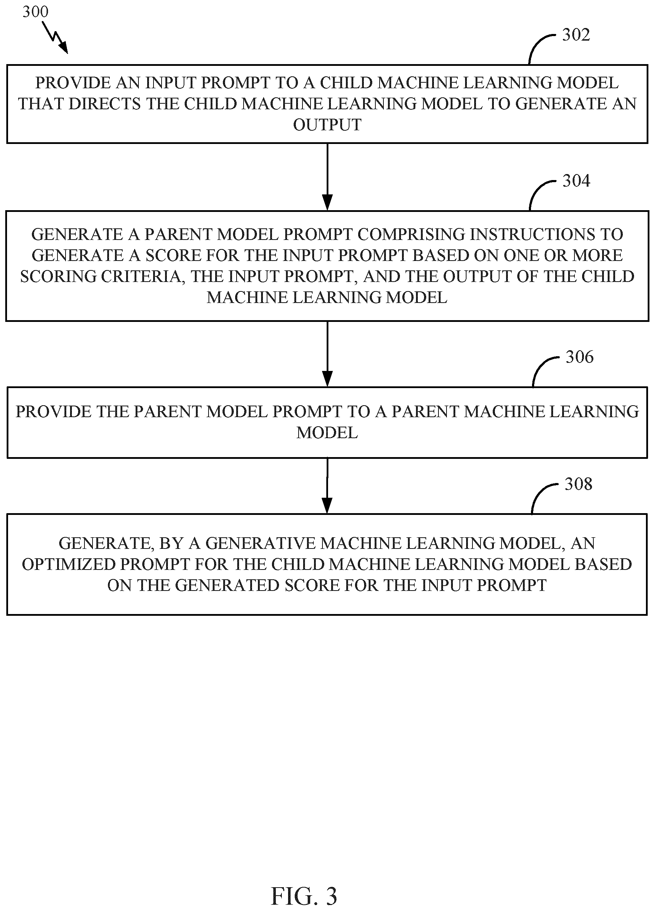

**FIG. 3** depicts example operations 300 related to optimizing machine learning model prompts. For example, operations 300 may be performed by one or more of the components described in **FIG. 1** and **FIG. 2****.**

Operations 300 begin at step 302 with providing an input prompt to a child machine learning model that directs the child machine learning model to generate an output.

Operations 300 continue at step 304 with generating a parent model prompt comprising instructions to generate a score for the input prompt based on one or more scoring criteria, the input prompt, and the output of the child machine learning model. In some embodiments, the scoring criteria comprise one or more criteria provided by a user. Certain embodiments provide that the scoring criteria comprise one or more criteria generated by the parent machine learning model.

Operations 300 continue at step 306 with providing the parent model prompt to a parent machine learning model. In certain embodiments, the score generated by the parent machine learning model in response to receiving the parent model prompt comprises a binary indication of whether the input prompt satisfies each criterion of the one or more scoring criteria. According to certain embodiments, the parent machine learning model has a larger number of parameters than the child machine learning model.

Operations 300 continue at step 308 with generating, by a generative machine learning model, an optimized prompt for the child machine learning model based on the generated score for the input prompt. According to some embodiments, generating the optimized prompt for the child machine learning model comprises updating the input prompt to comply with one or more of the one or more scoring criteria that were not satisfied by the input prompt. In some embodiments, a same machine learning model is used as both the parent machine learning model and the generative machine learning model.

In certain embodiments, the optimized prompt is further optimized based on using the parent machine learning model to generate a respective score for the optimized prompt. Some embodiments provide that the optimized prompt is further optimized by repeating a process involving the child machine learning model and the parent machine learning model for a number of iterations specified by a user.

Certain embodiments provide that the generative machine learning model is trained based on one or more manual updates to one or more optimized prompts. In some embodiments, the generative machine learning model is trained based on user feedback given in response to a respective optimized prompt.

### Example of a Processing System for Optimizing Machine Learning Model Prompts

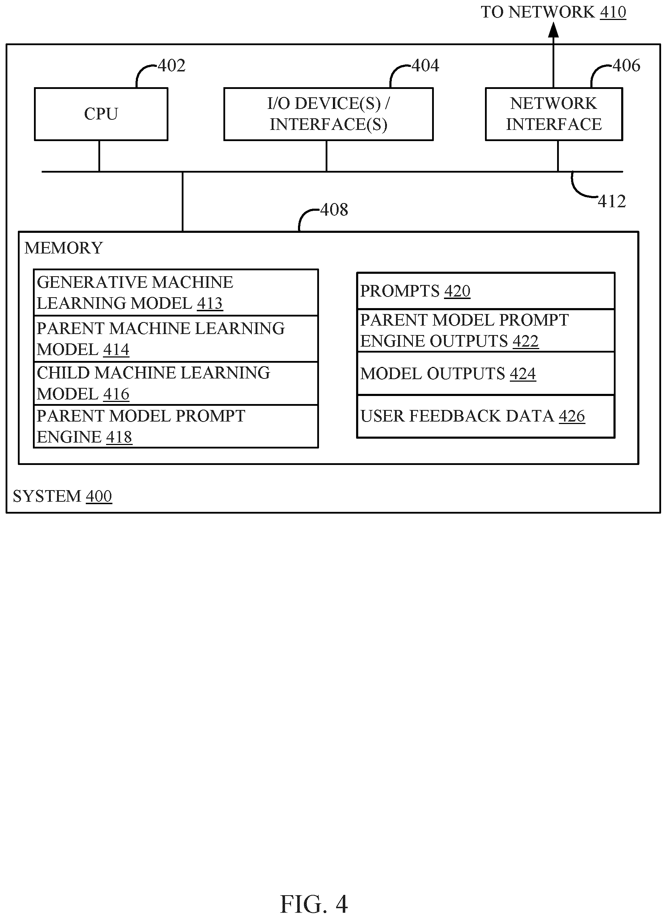

**FIG. 4** illustrates an example system 400 with which embodiments of the present disclosure may be implemented. For example, system 400 may be configured to perform operations 300 of **FIG. 3** and/or to implement one or more components as in **FIG. 1** or **FIG. 2****.**

System 400 includes a central processing unit (CPU) 402, one or more I/O device interfaces that may allow for the connection of various I/O devices 404 (e.g., keyboards, displays, mouse devices, pen input, etc.) to the system 400, network interface 406, a memory 408, and an interconnect 412. It is contemplated that one or more components of system 400 may be located remotely and accessed via a network 410. It is further contemplated that one or more components of system 400 may comprise physical components or virtualized components.

CPU 402 may retrieve and execute programming instructions stored in the memory 408. Similarly, the CPU 402 may retrieve and store application data residing in the memory 408. The interconnect 412 transmits programming instructions and application data, among the CPU 402, I/O device interface 404, network interface 406, and memory 408. CPU 402 is included to be representative of a single CPU, multiple CPUs, a single CPU having multiple processing cores, and other arrangements.

Additionally, the memory 408 is included to be representative of a random access memory or the like. In some embodiments, memory 408 may comprise a disk drive, solid state drive, or a collection of storage devices distributed across multiple storage systems. Although shown as a single unit, the memory 408 may be a combination of fixed and/or removable storage devices, such as fixed disc drives, removable memory cards or optical storage, network attached storage (NAS), or a storage area-network (SAN).

As shown, memory 408 includes generative machine learning model 413, parent machine learning model 414, child machine learning model 416, and parent model prompt engine 418. Generative machine learning model 413 may be representative of the generative machine learning model 220 of **FIG. 2****.** In some embodiments, parent machine learning model 414 may be representative of parent machine learning model 240 of **FIG. 2****.** Child machine learning model 416 may be representative of the child machine learning model 100 of **FIG. 1** and **FIG. 2****.** Parent model prompt engine 418 may be representative of parent model prompt engine 200 of **FIG. 2****.**

Memory 408 further comprises prompts 420, which may correspond to input prompt 105 of **FIG. 1** and **FIG. 2****.** Memory 408 further comprises parent model prompt engine output 422 which may correspond to parent model prompt 207 of **FIG. 2****.** Memory 408 further comprises model outputs 424, which may include child model output 209, input prompt score 213, and/or optimized prompt 115 **FIG. 2****.** Memory 408 further comprises user feedback data 426, which may correspond to the user feedback information collected and processed by the feedback engine 130 of **FIG. 1****.**

It is noted that in some embodiments, system 400 may interact with one or more external components, such as via network 410, in order to retrieve data and/or perform operations.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. A computer-readable storage medium may be termed a non-transitory medium. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

Therefore, from one perspective, there have been described approaches for generating optimized machine learning model prompts. Embodiments include providing an input prompt to a child machine learning model that directs the child machine learning model to generate an output. Embodiments further include generating a parent model prompt comprising instructions to generate a score for the input prompt based on one or more scoring criteria, the input prompt, and the output of the child machine learning model. Embodiments further include providing the parent model prompt to a parent machine learning model. Embodiments further include generating, by a generative machine learning model, an optimized prompt for the child machine learning model based on the generated score for the input prompt.

Further examples of feature combinations taught by the present disclosure are set out in the following numbered clauses.

Clause 1. A method of optimizing machine learning model prompts, comprising: providing an input prompt to a child machine learning model that directs the child machine learning model to generate an output; generating a parent model prompt comprising instructions to generate a score for the input prompt based on one or more scoring criteria, the input prompt, and the output of the child machine learning model; providing the parent model prompt to a parent machine learning model; receiving the score for the input prompt as an output from the parent machine learning model in response to the parent model prompt; and generating, by a generative machine learning model, an optimized prompt for the child machine learning model based on the score for the input prompt.

Clause 2. The method of clause 1, wherein the scoring criteria comprise one or more criteria provided by a user.

Clause 3. The method of clause 1 or 2, wherein the scoring criteria comprise one or more criteria generated by the parent machine learning model in response to an indication of a user's objectives.

Clause 4. The method of clause 1, 2 or 3, wherein the score comprises a binary indication of whether the input prompt satisfies each criterion of the one or more scoring criteria.

Clause 5. The method of any preceding clause, wherein generating the optimized prompt for the child machine learning model comprises updating the input prompt to comply with one or more of the one or more scoring criteria that were not satisfied by the input prompt.

Clause 6. The method of any preceding clause, wherein the optimized prompt is further optimized based on using the parent machine learning model to generate a respective score for the optimized prompt.

Clause 7. The method of any preceding clause, wherein the optimized prompt is further optimized by repeating a process involving the child machine learning model and the parent machine learning model for a number of iterations specified by a user.

Clause 8. The method of any preceding clause, wherein the generative machine learning model is trained based on one or more manual updates to one or more optimized prompts.

Clause 9. The method of any preceding clause, wherein the generative machine learning model is trained based on user feedback given in response to a respective optimized prompt.

Clause 10. The method of any preceding clause, wherein the parent machine learning model has a larger number of parameters than the child machine learning model.

Clause 11. The method of any preceding clause, wherein a same machine learning model is used as both the parent machine learning model and the generative machine learning model.

Clause 12. A method of optimizing machine learning model prompts, comprising: providing an input prompt to a child machine learning model that directs the child machine learning model to generate an output; providing the input prompt and the output generated by the child machine learning model to a parent machine learning model that has been trained to generate: one or more scoring criteria for the input prompt, and a score for the input prompt based on the one or more scoring criteria, the output generated by the child machine learning model, and the input prompt; and generating, by a generative machine learning model, an optimized prompt based on the generated score for the input prompt.

Clause 13. The method of clause 12, wherein one or more user-provided scoring criteria are concatenated to the one or more scoring criteria generated by the parent machine learning model and are also used by the parent machine learning model to generate the score for the input prompt.

Clause 14. A system for generating software application content related to forms, comprising: one or more processors; and a memory comprising instructions that, when executed by the one or more processors, cause the system to: providing an input prompt to a child machine learning model that directs the child machine learning model to generate an output; generating a parent model prompt comprising instructions to generate a score for the input prompt based on one or more scoring criteria, the input prompt, and the output of the child machine learning model; providing the parent model prompt to a parent machine learning model; receiving the score for the input prompt as an output from the parent machine learning model in response to the parent model prompt; and generating, by a generative machine learning model, an optimized prompt for the child machine learning model based on the score for the input prompt.

Clause 15. The system of clause 14, wherein the scoring criteria comprise one or more criteria provided by a user.

Clause 16. The system of clause 14 or 15, wherein the scoring criteria comprise one or more criteria generated by the parent machine learning model.

Clause 17. The system of clause 14, 15 or 16, wherein the optimized prompt is further optimized by repeating a process involving the child machine learning model and the parent machine learning model for a number of iterations specified by a user.

Clause 18. The system of any of clauses 14 to 17, wherein the generative machine learning model is trained based on one or more manual updates to one or more optimized prompts.

Clause 19. The system of any of clauses 14 to 18, wherein the generative machine learning model is trained based on user feedback given in response to a respective optimized prompt.

Clause 20. The system of any of clauses 14 to 19, wherein a same machine learning model is used as both the parent machine learning model and the generative machine learning model.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method of optimizing machine learning model prompts, comprising:
providing an input prompt to a child machine learning model that directs the child machine learning model to generate an output;
generating a parent model prompt comprising instructions to generate a score for the input prompt based on one or more scoring criteria, the input prompt, and the output of the child machine learning model;
providing the parent model prompt to a parent machine learning model;
receiving the score for the input prompt as an output from the parent machine learning model in response to the parent model prompt; and
generating, by a generative machine learning model, an optimized prompt for the child machine learning model based on the score for the input prompt.

2. The method of Claim 1, wherein the scoring criteria comprise one or more criteria provided by a user.

3. The method of Claim 1 or 2, wherein the scoring criteria comprise one or more criteria generated by the parent machine learning model in response to an indication of a user's objectives.

4. The method of Claim 1, 2 or 3, wherein the score comprises a binary indication of whether the input prompt satisfies each criterion of the one or more scoring criteria.

5. The method of any preceding Claim, wherein generating the optimized prompt for the child machine learning model comprises updating the input prompt to comply with one or more of the one or more scoring criteria that were not satisfied by the input prompt.

6. The method of any preceding Claim, wherein the optimized prompt is further optimized based on using the parent machine learning model to generate a respective score for the optimized prompt.

7. The method of any preceding Claim, wherein the optimized prompt is further optimized by repeating a process involving the child machine learning model and the parent machine learning model for a number of iterations specified by a user.

8. The method of any preceding Claim, wherein the generative machine learning model is trained based on one or more manual updates to one or more optimized prompts.

9. The method of any preceding Claim, wherein the generative machine learning model is trained based on user feedback given in response to a respective optimized prompt.

10. The method of any preceding Claim, wherein the parent machine learning model has a larger number of parameters than the child machine learning model.

11. The method of any preceding Claim, wherein a same machine learning model is used as both the parent machine learning model and the generative machine learning model.

12. A method of optimizing machine learning model prompts, comprising:
providing an input prompt to a child machine learning model that directs the child machine learning model to generate an output;
providing the input prompt and the output generated by the child machine learning model to a parent machine learning model that has been trained to generate:
one or more scoring criteria for the input prompt, and
a score for the input prompt based on the one or more scoring criteria, the output generated by the child machine learning model, and the input prompt; and
generating, by a generative machine learning model, an optimized prompt based on the generated score for the input prompt.

13. The method of Claim 12, wherein one or more user-provided scoring criteria are concatenated to the one or more scoring criteria generated by the parent machine learning model and are also used by the parent machine learning model to generate the score for the input prompt.

14. A system for generating software application content related to forms, comprising:
one or more processors; and
a memory comprising instructions that, when executed by the one or more processors, cause the system to:
providing an input prompt to a child machine learning model that directs the child machine learning model to generate an output;
generating a parent model prompt comprising instructions to generate a score for the input prompt based on one or more scoring criteria, the input prompt, and the output of the child machine learning model;
providing the parent model prompt to a parent machine learning model;
receiving the score for the input prompt as an output from the parent machine learning model in response to the parent model prompt; and
generating, by a generative machine learning model, an optimized prompt for the child machine learning model based on the score for the input prompt.

15. The system of Claim 14, further comprising functionality corresponding to the method of any of claims 2 to 11.
